# EUROPÄISCHE PATENTSCHRIFT

(11) **EP 3 993 290 B1**
(45) Veröffentlichungstag und Bekanntmachung des Hinweises auf die Patenterteilung: **26.06.2024**
(21) Anmeldenummer: 20204724.7
(22) Anmeldetag: 29.10.2020
(51) Int. Cl.: H04J 3/06, H04W 56/00

(54) **VERFAHREN ZUR ZEITSYNCHRONISATION VON SENSOREINHEITEN**
METHOD FOR TIME SYNCHRONISATION OF SENSOR UNITS
PROCÉDÉ DE SYNCHRONISATION TEMPORELLE DES UNITÉS DE CAPTEUR

(43) Veröffentlichungstag der Anmeldung: 04.05.2022
(73) Patentinhaber: Siemens AG Österreich, 1210 Wien (AT)
(72) Erfinder: Schiefer, Martin, 3100 St. Pölten (AT); Österreicher, Johannes, 2380 Perchtoldsdorf (AT); Kussyk, Jaroslaw, 1170 Wien (AT); Gila, Janos, 2340 Mödling (AT)
(74) Vertreter: Siemens Patent Attorneys

(56) Entgegenhaltungen:
- US-A1- 2012 188 997
- HUI DAI ET AL: "TSync", MOBILE COMPUTING AND COMMUNICATIONS REVIEW, ACM, 2 PENN PLAZA, SUITE 701 - NEW YORK USA, Bd. 8, Nr. 1, 1. Januar 2004 (2004-01-01), Seiten 125-139, XP058238088, ISSN: 1559-1662, DOI: 10.1145/980159.980173

## Beschreibung

### Technisches Gebiet

Die Erfindung bezieht sich auf ein Verfahren zur Zeitsynchronisation von Sensoreinheiten eines verteilten Systems, wie z.B. eines intelligenten Stromnetzes, eines intelligenten Gebäudes oder einer komplexen Produktionsanlage. Dabei ist in jeder Sensoreinheit eine Zeiteinheit ohne absoluten Zeitbezug vorhanden und es werden von den Sensoreinheiten erfasste Sensordaten über ein Funknetz an eine Zentraleinheit übermitteln werden.

### Stand der Technik

In verteilter Infrastruktur, wie z.B. so genannten intelligenten Stromnetzen (engl. Smart Grids) oder in verteilten, industriellen Systemen (z.B. Internet-of-Things- basierte Anlagen, Steuerungen von komplexen Prozessen, Verkehrsflusssteuerung, etc.) werden große Mengen an Sensordaten (z.B. Eventdaten, Messdaten, Signaldaten, Zustandswerte, etc.) generiert. Diese Sensordaten liefern Informationen über einen Anlagenzustand und können zur Überwachung und Steuerung der verteilten Infrastruktur über ein Kommunikationsnetz übermittelt und zentral - beispielsweise von einer zentralen Steuereinheit - ausgewertet werden.

Abhängig von der jeweiligen Sensorart (z.B. Strommessgerät, Spannungsmessgerät, etc.) und einer Art der Übermittlung der Sensordaten (z.B. drahtgebunden, Funkübertragung) ist ein jeweiliger Erfassungszeitpunkt der übermittelten Sensordaten für eine zentrale Auswertung in einer Zentraleinheit bekannt. So können beispielweise die Sensordaten bei der Erfassung durch die jeweilige Sensoreinheit mit einem Zeitstempel versehen werden, welcher der zentralen Auswertung zur Verfügung gestellt wird. Allerdings können dann nur die von einer Sensoreinheit übermittelten Daten in einen zeitlichen Bezug zueinander gebracht werden. Kommen die Daten von unterschiedlichen Sensoreinheiten, so fehlt meist eine gemeinsame, zeitliche Basis, um eine zeitliche Relation der Erfassungszeitpunkte zueinander herzustellen. Zur Ermittlung mancher Kenngrößen bzw. Zuständen von verteilten Infrastruktursystem ist beispielsweise ein genauer Erfassungszeitpunkt der jeweiligen Sensordaten (z.B. Spannungs-/Strommittelwerte, Lastspitzenwerte, etc. bei Smart Grids, etc.), welche von unterschiedlichen Sensoreinheiten der Infrastruktur geliefert werden, von geringer Bedeutung. Für andere Sensordaten, welche z.B. in einem Smart Grid bzw. 3-phasigen Stromnetz zum Feststellen einer Lastverteilung oder für eine genaue Zuordnung von Messdaten zu den jeweiligen Phasenleitern des 3-phasigen Stromnetzes oder beispielsweise zur Steuerung von komplexen Anlagenprozessen mit einer kritischen Zeitabfolge, etc. verwendet werden, sind die genauen Mess- bzw. Erfassungszeitpunkte der Sensordaten, welche von den jeweiligen Sensoreinheiten aufgezeichnet wurden, sowie ihre genaue zeitliche Abfolge bzw. ihr zeitlicher Bezug zueinander essentiell.

Häufig werden zur Zeitsynchronisation von Endgeräten, wie z.B. Sensoreinheiten einer verteilten Infrastruktur, welche über ein Kommunikationsnetz Sensordaten an eine zentrale Einheit z.B. für eine Datenerfassung und -auswertung übermitteln, so genanntes Time-sensitive Networking oder kurz: TSN eingesetzt. Damit ein TSN-Netzwerk mit einer getakteten Endezu-Ende-Übertragung von Daten, Signalen, etc. mit harten Echtzeitanforderungen funktioniert, muss jeder Netzteilnehmer - d.h. jede Sensoreinheit einer verteilten Infrastruktur - eine eigene, interne Zeiteinheit (z.B. lokale Uhr, interne Zählereinheit, etc.) und damit ein Grundverständnis für Zeit aufweisen. Weiterhin ist es notwendig, dass die internen Zeiteinheiten bzw. Uhren der jeweiligen TNS-Teilnehmer synchronisiert sind, um sicherzustellen, dass alle Teilnehmer stets demselben Kommunikationszyklus folgen und beispielsweise zum richtigen Zeitpunkt die richtigen Aktionen ausführen.

Die Zeitsynchronisation in einem TSN-Netz kann mittels unterschiedlicher Vorgehensweisen realisiert werden. Bei einem drahtgebundenen TSN-Netz kann die Synchronisation beispielsweise auf der Softwareebene gelöst werden. Dazu ist es allerdings erforderlich, dass jede TNS-Einheit über eine Datenleitung verfügt, über welche die Zeitsynchronisation erfolgen kann. Das ist z.B. verteilten Infrastruktursystemen, wie z.B. Smart Grids, mit zahlreichen Teilnehmern sehr aufwendig und kostenintensiv, insbesondere bei einer Nachrüstung bereits vorhandener Sensoreinheiten.

Wird beispielsweise ein drahtloses Kommunikationsnetz bzw. Funknetz für die Kommunikation in einer verteilten Infrastruktur genutzt, so kann z.B. jeder TSN-Teilnehmer bzw. Sensoreinheit der verteilten Infrastruktur mit einer Funk-Uhr (z.B. zum Empfang eines Zeitzeichens eines Zeitzeichensenders (DCF77)), GPS-Uhr, etc. ausgestattet werden. Dies ist allerdings ebenfalls kostenintensiv. Weiterhin kann nicht immer sichergestellt werden, dass ein Funk- oder GPS-Signal zur Verfügung steht oder von jedem TSN-Teilnehmer empfangen werden kann. Da beispielsweise ein Empfang von GPS kaum bzw. nicht verfügbar ist, können GPS-Signale beispielsweise von Sensoreinheiten eines Netzwerks in einer Fabrikhalle oder in einem Tunnel, etc. nur schwer bis überhaupt nicht empfangen werden. Weiterhin sind z.B. Funksignale zur Zeitsynchronisation, wie z.B. DCF77, meist nur regional beschränkt verfügbar. Auch weisen Zeitsynchronisationsquellen über Funk den Nachteil auf, dass z.B. einen Einbauposition der Antenne in der jeweiligen Sensoreinheit ebenfalls eingeschränkt sein kann.

Weitere Möglichkeiten für eine Zeitsynchronisation von Sensoreinheiten mit einer zentralen Uhr bzw. Zeitgebereinheit bieten beispielsweise so genannte Low Power Wide Area Network- bzw. LPWAN-Protokolle, wie z.B. NarrowBand-IoT (kurz: NBIoT). LPWAN-Protokolle sind vor allem darauf ausgelegt, dass eine große Reichweite und ein niedriger Energieverbrauch der Endgeräteeinheiten bei niedrigen Betriebskosten erreicht werden können. NB-IoT ist beispielsweise ein LPWAN-Funkprotokoll, welches von der 3GPP in der Release 13 (LTE Advanced Pro) im Jahr 2016 spezifiziert wurden und auf LTE- bzw. Long Term Evolution-Technologie basiert.

Mit Hilfe von Software basierten Protokollsynchronisationsmechanismen können z.B. bei der Verwendung von NB-IoT für die Kommunikation in einem Funknetz die Zeiteinheiten der Sensoreinheiten, welche keinen absoluten Zeitbezug aufweisen, mit einer bestimmten Toleranz bzw. Genauigkeit (z.B. +/- 4 Sekunden) synchronisiert werden.

Eine zeitliche Abweichung von Erfassungsintervallen und/oder Erfassungszeitpunkten der z.B. von der jeweiligen Sensoreinheit erfassten Sensordaten ist dabei vor allem von der Genauigkeit der Synchronisation mit einer zentralen Zeiteinheit bzw. Uhr abhängig, von welcher z.B. ein absoluter Zeitbezug vorgegeben werden kann. Bei Verwendung von des NB-IoT-Protokolls im Funknetz kann es beispielsweise Schwankungen von +/- 4 Sekunden bei der Synchronisation der internen Zeiteinheit der Sensoreinheit mit der zentralen Zeiteinheit kommen und damit zu entsprechenden Ungenauigkeiten bei Erfassungsintervallen und/oder -zeitpunkten von Sensordaten. Weiterhin ist die zeitliche Abweichung von Erfassungsintervallen und/oder Erfassungszeitpunkten der von der jeweiligen Sensoreinheit erfassten Sensordaten auch von einer Genauigkeit der internen Zeiteinheit der jeweiligen Sensoreinheit abhängig.

### Darstellung der Erfindung

Die Erfindung ist definiert durch den unabhängigen Anspruch 1. Weitere Ausführungen werden durch die abhängigen Ansprüche definiert.

Es ist daher eine Aufgabe der vorliegenden Erfindung, ein Verfahren für eine Zeitsynchronisation von Sensoreinheiten eines verteilten Systems anzugeben, welches eine Verbesserung zum Stand der Technik darstellt und durch welches auf einfache und kostengünstige Weise sowie mit hoher Genauigkeit eine zeitliche Relation zwischen von den Sensoreinheiten des verteilten Systems erfassten Sensordaten hergestellt werden kann.

Diese Aufgabe wird mit einem eingangs erwähnten Verfahren dadurch gelöst, dass in einem Funknetz, über welches von den Sensoreinheiten des verteilten Systems die erfassten Sensordaten an eine Zentraleinheit übermittelt werden, ein Kennsignal in regelmäßigen, zeitlichen Abständen ausgesendet wird. Ein Empfang des Kennsignals wird von jeder Sensoreinheit überwacht und jeweils bei Empfang eines charakteristischen Zeitmerkmals des Kennsignals (z.B. Kennsignalanfang, Kennsignalende, etc.) von der jeweiligen Sensoreinheit ein jeweils aktueller Wert einer internen Zeiteinheit, welche jede Sensoreinheit aufweist und welche keinen Bezug zu einer gemeinsamen, absoluten Zeitbasis bzw. Bezugszeit im verteilten System besitzt, gemeinsam mit einer Senderidentifikation gespeichert. Dabei ist die Senderidentifikation im jeweils versendeten Kennsignal enthalten. Werden von einer Sensoreinheit Sensordaten erfasst, so wird von der jeweiligen Sensoreinheit ein weiterer, aktueller Wert der internen Zeiteinheit der jeweiligen Sensoreinheit gespeichert. Beim Übertragen der Sensordaten an die Zentraleinheit werden den erfassten Sensordaten zumindest der bei Empfang des charakteristischen Zeitmerkmals des Kennsignals gespeicherte Wert der internen Zeiteinheit, die zugehörige Senderidentifikation des Kennsignals, und der weitere, bei Erfassen der Sensordaten gespeicherte Wert der internen Zeiteinheit zugeordnet und gemeinsam mit diesen übertragen. Die Zentraleinheit kann dann die den Sensordaten zugeordneten Informationen auswerten und anhand der Senderidentifikation eine Bezugszeitbasis für die Sensoreinheiten ermitteln. Weiterhin kann von der Zentraleinheit anhand des bei Empfang des charakteristischen Zeitmerkmals des Kennsignals gespeicherten Werts der internen Zeiteinheit der jeweiligen Sensoreinheit und des beim Erfassen der Sensordaten weiteren, gespeicherte Werts der internen Zeiteinheit der jeweiligen Sensoreinheit eine zeitliche Relation der übertragenen Sensordaten der jeweiligen Sensoreinheit zur ermittelten Bezugszeitbasis abgeleitet werden.

Der Hauptaspekt der vorliegenden Erfindung besteht darin, dass durch das Verfahren eine Synchronisation von vielen Sensoreinheiten zu einer gemeinsamen Bezugszeitbasis durchgeführt werden kann und die von den Sensoreinheiten erfassten Sensordaten insbesondere durch eine zentrale Auswertung in der Zentraleinheit in eine Relation zu dieser Zeitbasis bringen zu können. Anhand der mit den Sensordaten übermittelten Senderidentifikation des Senders, von welchem im Funknetz das Kennsignal in zeitlich regelmäßigen und definierten Abständen ausgesendet wird, kann bei der zentralen Auswertung das Kennsignal bzw. dessen Versand und Empfang zum Ermitteln einer Bezugszeitbasis für alle jene Sensoreinheiten genutzt werden, welche von dieser Sendereinheit das Kennsignal empfangen bzw. von welchen dieselbe Senderidentifikation mit den Sensordaten mitgesendet wird. Dadurch ist es möglich, durch zentrale Auswertung der übermittelten Sensordaten und der mitgesendeten Daten, wie z.B. des bei Empfang des charakteristischen Zeitmerkmals des Kennsignals gespeicherte Werts der internen Zeiteinheit der jeweiligen Sensoreinheit und der weitere, bei Erfassen der Sensordaten gespeicherte Wert der internen Zeiteinheit der jeweiligen Sensoreinheit eine Zeitsynchronisation der Sensordaten der unterschiedlichen Sensoreinheiten und damit der Sensoreinheiten mit einer Genauigkeit der Empfangszeitmessung des Kennsignals vorzunehmen. Mittels des Verfahrens können damit beispielsweise eine zeitliche Relation zur gemeinsamen Bezugszeitbasis und/oder zeitliche Abfolgen der Sensordaten bestimmt werden. Unbekannt bleibt bei diesem Verfahren weiterhin ein absoluter Zeitpunkt, an welche die jeweiligen Sensordaten von der jeweiligen Sensoreinheit erfasst bzw. gemessen wurden.

Eine zweckmäßige Ausgestaltung der Erfindung sieht vor, dass zum Überwachen des Empfangs des Kennsignal in der jeweiligen Sensoreinheit eine Stromsignatur einer Funkeinheit der Sensoreinheit verwendet wird. Da die Funkeinheit einer Sensoreinheit beispielsweise während des Empfangs des Kennsignals aus dem Funknetz einen vom herkömmlichen Betrieb unterschiedlichen Stromverbrauch ausweist, kann aus der so genannten Stromsignatur - d.h. aus dem Stromverbrauch - auf einfache Weise ermittelt werden, wenn der Empfang des Kennsignals beginnt und endet. So kann die Funkeinheit einer Sensoreinheit beispielsweise zur Reduktion eines Stromverbrauchs der Sensoreinheit üblicherweise in einem "Schlafzustand" versetzt sein und beispielsweise während des Empfangs des Kennsignals aus dem Funknetz in einen Übertragungsmodus wechseln. Dadurch entsteht z.B. einen typische Stromsignatur, welche von der Sensoreinheit zum Erkennen des Übertragungsendes des Kennsignals herangezogen werden kann.

Idealerweise kann das erfindungsgemäße Verfahren zusätzlich auch dazu herangezogen werden, die Genauigkeit der internen Zeiteinheit der jeweiligen Sensoreinheit zu überprüfen und gegebenenfalls eine Korrektur vorzunehmen. Dazu werden zwischen den zu einem jeweiligen Empfang des charakteristischen Zeitmerkmals eines jeweiligen Kennsignals erfassten Werten der internen Zeiteinheit der jeweiligen Sensoreinheit eine Differenz gebildet. D.h. es wird beispielsweise jeweils der Differenzwert bzw. der Abstand zwischen einem jeweils aktuellen, gespeicherten Wert der internen Zeiteinheit zum Empfang des charakteristischen Zeitmerkmals des aktuell empfangenen Kennsignals und dem gespeicherten Wert der internen Zeiteinheit, welcher jeweils bei Empfang des charakteristischen Zeitmerkmals des vorgegangenen Kennsignals gespeichert wurde, bestimmt. Die Differenzwerte werden dann verglichen und eine Korrektur der internen Zeiteinheit durchgeführt, wenn eine Abweichung bei den Differenzwerten festgestellt wird.

Es ist weiterhin vorteilhaft, wenn den erfassten Sensordaten eine Sensoridentifikation der jeweiligen Sensoreinheit zugeordnet wird, von welcher die Sensordaten erfasst worden sind. Damit können bei der zentralen Auswertung die Sensordaten auf einfache Weise der jeweiligen Sensoreinheit zugeordnet werden.

Weiterhin ist es günstig, wenn den Sensoreinheiten des verteilten Systems ein Startzeitpunkt zum Erfassen der Sensordaten vorgegeben wird, welcher vom Empfang des charakteristischen Zeitmerkmals des Kennsignals durch die jeweilige Sensoreinheit abhängt. Damit kann den Sensoreinheiten zentral ein Startzeitpunkt zum Erfassen der jeweiligen Sensordaten vorgegebenen werden, welcher in zeitlicher Relation zur gemeinsamen Bezugszeitbasis - d.h. zum im Funknetz ausgesendeten Kennsignal bzw. zum jeweiligen Empfang des Kennsignals durch die jeweiligen Sensoreinheit - steht.

Ein besonders günstige Ausführungsform der Erfindung sieht vor, dass eine Sensoreinheit des verteilten Systems mit einem Echtzeitzugang (z.B. GPS-Uhr, etc.) ausgestattet wird. Von dieser Sensoreinheit wird ebenfalls der Empfang des in regelmäßigen Abständen ausgesendeten Kennsignals (z.B. mittels der Stromsignatur) überwacht und durch den Echtzeitzugang der jeweilige Empfangszeitpunkt des Kennsignals ermittelt. Die ermittelten Empfangszeitpunkte des Kennsignals werden dann von dieser Sensoreinheit regelmäßig an die Zentraleinheit übermittelt. Diese Sensoreinheit stellt durch ihren Echtzeitzugang ein Art Takt-Master-Sensor im verteilten System dar, durch welchen absolute Empfangszeitpunkte für das Kennsignal bestimmt werden können. Damit kann in der Zentraleinheit eine Zuordnung der jeweiligen Empfangszeitpunkte des Kennsignals für die weiteren Sensoreinheiten erfolgen und die Sensordaten der Sensoreinheiten zu einer Echtzeit zugeordnet werden.

Idealerweise wird als interne Zeiteinheit der jeweiligen Sensoreinheit eine Zählereinheit eingesetzt, welche einfach in der Sensoreinheit realisierbar ist. Eine Zählereinheit weist zwar keinen absoluten Zeitbezug auf, es kann aber mittels einer Zählereinheit sehr einfach ein relativer Zeitbezug bzw. Abstand zu z.B. einem Ereignis bzw. einem charakteristischen Zeitmerkmal, wie einem Anfang oder Ende des regelmäßig im Funknetz ausgesendetem Kennsignals, hergestellt werden.

Es ist auch günstig, wenn als Funknetz ein sternförmiges, synchronisiertes Funknetz, insbesondere ein Funknetz nach dem 4G- oder 5G-Standard, verwendet wird. Die Eigenschaften derartig ausgestalteter Funknetz können auf sehr einfach Weise genutzt werden, um daraus eine zeitliche Synchronisation der Sensoreinheiten abzuleiten, welche das Funknetz zur Datenübertragung nutzen.

Idealerweise wird vor allem in sternförmigen, synchronisierten Funknetzen, in regelmäßigen, zeitliche Abständen von den jeweiligen Basisstation ein Kennsignal - ein so genannte Beacon-Signal - ausgesendet. Dieses Beacon-Signal wird von der jeweiligen Basisstation genutzt, um die jeweils in einem vorgegebenen Bereich (z.B. Funkzelle) am Funknetz angemeldeten Endgeräteeinheiten zu identifizieren. Ein Beacon-Signal kann dabei unterschiedliche Parameter der Basisstation umfassen, wie z.B. eine Identifikation des Mobilfunknetzes, eine Identifikation der Basisstation, etc., aus welchen sehr einfach die Identifikation des Senders des Beacon-Signals bestimmt werden kann.

Es empfiehlt sich auch, wenn im Funknetz das so genannte NarrowBand-IoT-Protokoll oder das so genannte LTE-Cat M1-Protokoll für eine Kommunikation mit den Sensoreinheiten verwendet wird. NB-IoT ist beispielsweise ein LPWAN-Funkprotokoll, welches von der 3GPP in der Release 13 (LTE Advanced Pro) im Jahr 2016 spezifiziert wurden und auf LTE- bzw. Long Term Evolution-Technologie basiert. Alternativ zum NB-IoT-Protokoll können auch andere Protokolle wie z.B. LTE-Cat M1 (Long-Term Evolution for Machines, kurz LTE-M) im Funknetz verwendet werden, welches einen ergänzenden Standard der 3GPP für LTE im Funknetz darstellt, um typische Anwendungen des Internet der Dinge bzw. Internet-of-Things (IoT) zu realisieren. Mit Hilfe von Software basierten Protokollsynchronisationsmechanismen können z.B. bei der Verwendung von Protokollen, wie z.B. NB-IoT, LTE-Cat M1, etc. für die Kommunikation in einem Funknetz die internen Zeiteinheiten der Sensoreinheiten, welche keinen absoluten Zeitbezug aufweisen, mit einer bestimmten Toleranz bzw. Genauigkeit (z.B. +/- 4 Sekunden) synchronisiert werden. Dadurch kann z.B. ein Zeitrahme bzw. eine Grobsynchronisation vorgenommen werden, welche durch die Erfindung entsprechend verfeinert bzw. genauer gemacht wird.

Idealerweise kann das erfindungsgemäße Verfahren für unterschiedliche Anwendungen in einem verteilten System, wie z.B. einem intelligenten Stromnetz bzw. Smart Grid, eingesetzt werden, um beispielsweise Messungen von Strom und Spannung phasengenau durchführen zu können. Mit Hilfe derartiger Anwendungen kann auch eine Zuordnung der einzelnen Sensoreinheiten, welche Messpunkte im Netz darstellen, zu einem jeweiligen Phasenleiter einen mehrphasigen, üblicherweise dreiphasigen Stromnetz getroffen werden. Weiterhin kann das erfindungsgemäße Verfahren in verschiedenen Anwendungsfällen in der Prozessindustrie - wie z.B. bei der Steuerung von komplexen Prozessen oder bei Prozessen mit kritischer Zeitabfolge - oder bei der Verkehrsflusssteuerung (z.B. für einen dynamische Gestaltung von Lichtzeichen) angewendet werden.

### Kurzbeschreibung der Zeichnung

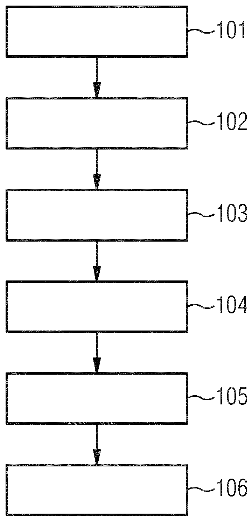

Die Erfindung wird nachfolgend in beispielhafter Weise anhand der beigefügten Figur 1 näher erläutert. Die Figur 1 zeigt dabei einen beispielhaften Ablauf des erfindungsgemäßen Verfahren zur Zeitsynchronisation von Sensoreinheiten in einem verteilten System.

### Ausführung der Erfindung

Figur 1 zeigt in schematischer Weise eine beispielhaften Ablauf des Verfahrens zur Zeitsynchronisation von Sensoreinheiten eines verteilten Systems, wie z.B. eines intelligenten Stromnetzes oder Smart Grids, einer komplexen Industrieanlagen, etc. Von den Sensoreinheiten werde im System an unterschiedlichen Messpunkten Sensordaten, wie z.B. Messwerte, Eventdaten, Zustandsdaten/-werte, Signaldaten, etc., erfasst, welche über ein Funknetz an eine Zentraleinheit beispielsweise für eine zentrale Auswertung übermittelt werden. Als Funknetz kann beispielsweise ein sternförmiges, synchronisiertes Funknetz, wie z.B. ein Funknetz nach dem 4G- bzw. LTE- oder 5G-Standard der 3GPP genutzt werden. Derartige Funknetz sind vor allem für die mobile Kommunikation weitverbreitet und können daher einfach für die Übertragung der Sensordaten genutzt werden. Idealerweise wird im Funknetz für die Kommunikation mit den Sensoreinheiten das so genannte NarrowBand-IoT-Protokoll oder das so genannte LTE-Cat M1-Protokoll eingesetzt.

In einem Aussendeschritt 101 wird im Funknetz in regelmäßigen, zeitlichen Abständen ein definiertes Kennsignal ausgesendet. Als Kennsignal kann beispielsweise ein so genanntes Beacon-Signal verwendet. Beacon-Signale werden beispielsweise bei sternförmigen, synchronisierten Funknetzen, wie z.B. 4G- oder 5G-Netzen, regelmäßig von Basisstationen ausgesendet, um z.B. Endgeräte im Bereich der jeweiligen, zur aussendenden Basisstation gehörenden Funkzelle zu identifizieren. D.h., alle Endgeräte - wie z.B. die jeweiligen Sensoreinheiten des verteilten Systems - im Funkzellenbereich einer Basisstation erhalten dasselbe Beacon-Signal, welches neben anderen Parameter auch eine Senderidentifikation der aussendenden Basisstation umfasst.

In einem Überwachungsschritt 102 wird ein Empfang des Kennsignals von jeder Sensoreinheit des verteilten Systems überwacht. Dazu kann in die jeweiligen Sensoreinheit beispielsweise einen Stromsignatur bzw. eine Stromverbrauch einer Funkeinheit der jeweiligen Sensoreinheit verwendet werden. Durch den Empfang des Kennsignals aus dem Funknetz verändert sich z.B. ein Stromverbrauch der Funkeinheit, wodurch charakteristischen Zeitmerkmale des Kennsignals, wie z.B. ein Empfangsbeginn und ein Empfangsende des Kennsignals, in der Sensoreinheit festgestellt werden kann.

Wird der Empfang des charakteristischen Zeitmerkmals des Kennsignals (z.B. Kennsignalende, Empfangsende des Kennsignals, etc.) durch die Funkeinheit der jeweiligen Sensoreinheit z.B. anhand der Stromsignatur bzw. des Stromverbrauchs der Funkeinheit erkannt, so wird in einem Speicherschritt 103 ein gerade aktueller Wert einer internen Zeiteinheit der jeweiligen Sensoreinheit abgespeichert. Die sensorinterne Zeiteinheit kann beispielsweise als Zählereinheit ausgeführt sein und sie besitzt keinen Bezug zu einer absoluten Zeitbasis, welche im gesamten, verteilten System z.B. für alle Sensoreinheiten als Bezugszeit verwendet werden könnte. Wird z.B. als Zeiteinheit eine Zählereinheit verwendet, so wird z.B. der Zählerstand am Ende des Empfangs des Kennsignals gespeichert. Mit dem aktuellen Wert der internen Zeiteinheit der jeweiligen Sensoreinheit wird zumindest eine Senderidentifikation jener Sendeeinheit des Funknetzes (z.B. cell-ID der Basisstation, etc.) abgespeichert, welche das Kennsignal ausgesendet hat. Die Sendeidentifikation kann z.B. im Kennsignal enthalten sein.

Während oder am Ende des Speicherschritts 103 kann beispielsweise sehr einfach eine Genauigkeit der internen Zeiteinheit der jeweiligen Sensoreinheit überprüft werden. Dazu wird aus dem im aktuellen Speicherschritt 103 gespeicherte Wert der internen Zeiteinheit und aus einem im vorangegangenen Speicherschritt 103 - d.h. bei Empfang eines vorangegangenen Kennsignals aus dem Funknetz gespeicherten - Wert der internen Zeiteinheit ein Differenzwert gebildet. Dieser Differenzwert wird mit davor ermittelten Differenzwerten verglichen. Liegt keine Abweichung zwischen den Differenzwerten vor, so entsprechen die Differenzwerte den regelmäßigen, zeitlichen Abständen zwischen den in der jeweiligen Sensoreinheit empfangenen Kennsignalen. Daraus kann geschlossen werden, dass die interne Zeiteinheit der jeweiligen Sensoreinheit mit einer entsprechenden Genauigkeit bzw. annähernd mit der Genauigkeit des Kennsignalempfangs läuft. Werden Abweichungen zwischen den Differenzwerten festgestellt, so kann die interne Zeiteinheit der jeweiligen Sensoreinheit z.B. mit Hilfe von vorgebbaren Korrekturalgorithmen korrigiert werden, um eine entsprechende Genauigkeit herzustellen.

In einem Erfassungsschritt 104 werden dann von der Sensoreinheit die jeweiligen Sensordaten (z.B. Messwerte für Strom und/oder Spannung, Signaldaten, Zustandsdaten/-werte, etc.) erfasst. Dabei wird ein zum Erfassungszeitpunkt der Sensordaten aktueller Wert der internen Zeiteinheit der jeweiligen Sensoreinheit gespeichert. Wird z.B. als Zeiteinheit eine Zählereinheit verwendet, so wird z.B. der Zählerstand zum Zeitpunkt der Datenerfassung gespeichert.

Für den Erfassungsschritt 104 kann beispielsweise mehreren oder allen Sensoreinheiten des Systems ein Startzeitpunkt für die Datenerfassung z.B. von der Zentraleinheit vorgegeben werden. Dieser Startzeitpunkt kann beispielsweise vom Empfang des Kennsignals, welches von den Sensoreinheiten empfangen wird, abhängig gemacht werden. So kann beispielsweise den Sensoreinheiten vorgegeben werden, dass nach einer definierten Anzahl von empfangenen Kennsignalen und bei einem vorgegebenen Abstandswert zum letzten, empfangenen Kennsignal der definierten Anzahl jede der Sensoreinheiten ihre Sensordaten erfasst. D.h., alle entsprechend instruierten Sensoreinheiten zeichnen beispielsweise ihre Sensordaten auf, wenn z.B. zum zweiten oder zum fünften Mal das Kennsignal empfangen wurde und wenn beispielsweise der aktuelle Wert der internen Zeiteinheit der jeweiligen Sensoreinheiten nach dem zweiten oder fünften Empfang des Kennsignals um den vorgegebenen Abstandswert (z.B. 10, 15, etc.) erhöht hat.

In einem Übertragungsschritt 105 werden dann den erfassten Sensordaten zumindest zugeordnet:
- der Wert der internen Zeiteinheit der jeweiligen Sensoreinheit, welcher bei Empfang des charakteristischen Zeitmerkmals jenes Kennsignals gespeichert wurde, welches zuletzt vor der Erfassung der Sensordaten empfangen wurde;
- die zum Kennsignal gehörende Senderidentifikation; und
- der Wert der internen Zeiteinheit der jeweiligen Sensoreinheit, welcher zum Zeitpunkt der Erfassung der Sensordaten gespeichert wurde.

Alternativ zu den beiden Werten der internen Zeiteinheit der jeweiligen Sensoreinheit, welche den Endzeitpunkt des Kennsignalempfangs und den Erfassungszeitpunkt der Sensordaten durch die jeweilige Sensoreinheit repräsentieren, kann auch nur einer der beiden Werte der internen Zeiteinheit sowie ein Differenzwert zum anderen Wert der internen Zeiteinheit den Sensordaten zugeordnet werden. So kann beispielsweise den Sensordaten der gespeicherte Wert der internen Zeiteinheit zum Erfassungszeitpunkt der Daten und ein Delta-Wert zugeordnet werden, welcher einen zeitlichen Abstand zum zuletzt empfangenen Kennsignal repräsentiert - z.B. eine Differenz des Zählerwerts zum Erfassungszeitpunkts der Sensordaten und des Zählerwerts bei Empfang des charakteristischen Zeitmerkmals des Kennsignal bei Verwendung einer Zählereinheit als interne Zeiteinheit.

Weiterhin kann im Übertragungsschritt 105 den Sensordaten eine Sensoridentifikation der jeweiligen Sensoreinheit zugeordnet werden, von welchen die Sensordaten erfasst wurden. Damit können die Sensordaten in der Zentraleinheit sehr einfach der jeweiligen Sensoreinheit zugeordnet werden. Im Übertragungsschritt 105 werden dann die erfassten Sensordaten, welchen zumindest die angeführten Werte der internen Zeiteinheit der jeweiligen Sensoreinheit, die Senderidentifikation des von der jeweiligen Sensoreinheit empfangenen Kennsignals und die entsprechende Sensoridentifikation zugeordnet wurden, an die Zentraleinheit beispielsweise für einen zentrale Auswertung und zeitliche Synchronisation übertragen.

In einem Auswerteschritt 106 werden die von den Sensoreinheiten an die Zentraleinheit übertragenen Sensordaten sowie die zugeordneten Werte der jeweiligen, internen Zeiteinheiten, Sensoridentifikation und Senderidentifikationen ausgewertet. Anhand der mit den erfassten Sensordaten übermittelten Senderidentifikation des von den jeweiligen Sensoreinheiten empfangenen Kennsignals und der Sensoridentifikation kann ermittelt werden, welche Sensoreinheiten dasselbe Kennsignal empfangen haben. Daraus kann dann von der Zentraleinheit eine auf dem Kennsignal basierende Bezugszeitbasis für diese Sensoreinheiten abgeleitet werden. Aus den Werten der internen Zeiteinheit der jeweiligen Sensoreinheit bei Empfang des charakteristischen Zeitmerkmals des (gemeinsamen) Kennsignals und zum Erfassungszeitpunkt der Sensordaten, welche den Sensordaten zugeordnet wurden, kann dann eine zeitliche Relation der übertragenen Sensordaten der jeweiligen Sensoreinheit zur ermittelten Bezugszeitbasis abgeleitet werden.

Zusätzlich kann eine spezielle Sensoreinheit des Systems mit einem Echtzeitzugang, wie z.B. einer GPS-Uhr, etc. ausgestattet sein und als Takt-Master-Sensor fungieren. Von dieser Sensoreinheit wird ebenfalls der Empfang des im Funknetz in regelmäßigen, zeitlichen Abständen ausgesendeten Kennsignals z.B. anhand der Stromsignatur ihrer Funkeinheit überwacht. Mit Hilfe des Echtzeitzugangs kann diese Sensoreinheit zu jedem Empfang des Kennsignals (z.B. Kennsignalende) einen absoluten Zeitpunkt für den Empfang des charakteristischen Zeitmerkmals des Kennsignals ermitteln. Die vom Takt-Master-Sensor ermittelten, absoluten Empfangszeitpunkte des Kennsignals werden in regelmäßigen Abständen an die Zentraleinheit für den Auswerteschritt 106 übermittelt. Damit kann in der Zentraleinheit im Auswerteschritt 106 eine Zuordnung der jeweiligen Empfangszeitpunkten des Kennsignals in der weiteren Sensoreinheiten und den jeweiligen Sensordaten der Sensoreinheiten zu einer Echtzeit erfolgen.

## Patentansprüche

1. Verfahren zur Zeitsynchronisation von Sensoreinheiten in einem verteilten System, wobei die Sensoreinheiten jeweils eine interne Zeiteinheit aufweisen, und wobei von den Sensoreinheiten Sensordaten erfasst und über ein Funknetz an eine Zentraleinheit übermittelt werden, ***dadurch gekennzeichnet, dass*** im Funknetz in regelmäßigen, zeitlichen Abständen ein Kennsignal ausgesendet wird (101), dass ein Empfang des Kennsignals in einer jeweiligen Sensoreinheit überwacht wird (102), dass bei Empfang eines charakteristischen Zeitmerkmals des Kennsignals jeweils ein aktueller Wert der internen Zeiteinheit der jeweiligen Sensoreinheit mit zumindest einer im Kennsignal enthaltenen Senderidentifikation gespeichert wird (103), dass bei Erfassen von Sensordaten ein weiterer, aktueller Wert der internen Zeiteinheit der jeweiligen Sensoreinheit gespeichert wird (104), dass den erfassten Sensordaten zumindest der bei Empfang des charakteristischen Zeitmerkmals des Kennsignals gespeicherte Wert der internen Zeiteinheit, die zugehörige Senderidentifikation des Kennsignals, und der weitere, bei Erfassen der Sensordaten gespeicherte Wert der internen Zeiteinheit zugeordnet werden und gemeinsam mit den Sensordaten an die Zentraleinheit übertragen werden (105), und dass anhand der Senderidentifikation eine Bezugszeitbasis und anhand des bei Empfang des charakteristischen Zeitmerkmals des Kennsignals gespeicherten Werts der internen Zeiteinheit der jeweiligen Sensoreinheit und des beim Erfassen der Sensordaten weiteren, gespeicherten Werts der internen Zeiteinheit der jeweiligen Sensoreinheit eine zeitliche Relation der übertragenen Sensordaten der jeweiligen Sensoreinheit zur Bezugszeitbasis abgeleitet werden (106).

2. Verfahren nach Anspruch 1, ***dadurch gekennzeichnet, dass*** zum Überwachen des Empfangs des Kennsignals in der jeweiligen Sensoreinheit eine Stromsignatur einer Funkeinheit der Sensoreinheit verwendet wird (102).

3. Verfahren nach einem der vorangegangenen Ansprüche,
***dadurch gekennzeichnet, dass*** zwischen einem Wert der internen Zeiteinheit bei Empfang des charakteristischen Zeitmerkmals des aktuell empfangenen Kennsignals und Werten der internen Zeiteinheit, welche bei Empfang des charakteristischen Zeitmerkmals vorhergehend empfangener Kennsignale gespeichert wurden, Differenzwerte gebildet wird, dass die Differenzwerte verglichen werden, und bei einer Abweichung der Differenzwerte einen Korrektur der internen Zeiteinheit der jeweiligen Sensoreinheit durchgeführt wird (103).

4. Verfahren nach einem der vorangegangenen Ansprüche,
***dadurch gekennzeichnet, dass*** den erfassten Sensordaten weiterhin eine Sensoridentifikation der jeweiligen Sensoreinheit zugeordnet wird (105).

5. Verfahren nach einem der vorangegangenen Ansprüche,
***dadurch gekennzeichnet, dass*** den Sensoreinheiten des verteilten Systems ein Startzeitpunkt zum Erfassen der Sensordaten vorgegeben wird (104), welcher vom Empfang des charakteristischen Zeitmerkmals des Kennsignals durch die jeweilige Sensoreinheit abhängt.

6. Verfahren nach einem der vorangegangenen Ansprüche,
***dadurch gekennzeichnet, dass*** eine Sensoreinheit des verteilten System mit einem Echtzeitzugang ausgestattet wird, dass von dieser Sensoreinheit durch Überwachung des Empfangs des im Funknetz in regelmäßigen, zeitlichen Abständen ausgesendeten Kennsignals und mittels des Echtzeitzugangs Empfangszeitpunkte des Kennsignals ermittelt werden, und dass die ermittelten Empfangszeitpunkte des Kennsignals regelmäßig an die Zentraleinheit übermittelt werden.

7. Verfahren nach einem der vorangegangenen Ansprüche,
***dadurch gekennzeichnet, dass*** als interne Zeiteinheit in der Sensoreinheit eine Zählereinheit eingesetzt wird.

8. Verfahren nach einem der vorangegangenen Ansprüche,
***dadurch gekennzeichnet, dass*** als Funknetz ein sternförmiges, synchronisiertes Funknetz, insbesondere ein Funknetz nach dem 4G- oder 5G-Standard, verwendet wird.

9. Verfahren nach einem der vorangegangenen Ansprüche,
***dadurch gekennzeichnet, dass** als Kennsignale Beacon-*Signale verwendet werden (101), welche von Basisstationen des Funknetzes für eine Teilnehmeridentifikation ausgesendet werden.

10. Verfahren nach einem der vorangegangenen Ansprüche,
***dadurch gekennzeichnet, dass*** im Funknetz das so genannte NarrowBand-IoT-Protokoll für eine Kommunikation mit den Sensoreinheiten verwendet wird.

11. Verfahren nach einem der Ansprüche 1 bis 9, ***dadurch ge-***
***kennzeichnet, dass*** im Funknetz das das so genannte LTE-Cat M1-Protokoll für eine Kommunikation mit den Sensoreinheiten verwendet wird.

## Claims

1. Method for time synchronisation of sensor units in a distributed system, wherein the sensor units each have an internal time unit, and wherein sensor data is captured by the sensor units and transmitted to a central unit via a radio network, **characterised in that** a characteristic signal is emitted (101) in the radio network at regular temporal intervals, that a receipt of the characteristic signal is monitored (102) in a respective sensor unit, that, on receipt of a characteristic time feature of the characteristic signal, a current value of the internal time unit of the respective sensor unit is stored (103) with at least one transmitter identifier contained in the characteristic signal in each case, that, when the sensor data is captured, a further, current value of the internal time unit of the respective sensor data is stored (104), that at least the value of the internal time unit stored when is received, the associated transmitter identifier of the characteristic signal, and the further value of the internal time unit stored when the sensor data is captured are assigned to the captured sensor data and transferred (105) to the central unit together with the sensor data, and that a reference time basis is derived (106) based on the transmitter identifier and a temporal relation between the transferred sensor data of the respective sensor unit and the reference time basis is derived based on the value of the internal time unit of the respective sensor unit stored when the characteristic time feature of the characteristic signal is received and based on the further value of the internal time unit of the respective sensor unit stored when the sensor data is captured.

2. Method according to claim 1, **characterised in that** a current signature of a radio unit of the sensor unit is used (102) for monitoring the receipt of a characteristic signal in the respective sensor unit.

3. Method according to one of the preceding claims,
**characterised in that** difference values are formed between a value of the internal time unit on receipt of the characteristic time feature of the currently received characteristic signal and values of the internal time unit, which were stored on receipt of the characteristic time feature of the previously received characteristic signals, that the difference values are compared, and in the case of a deviation between the difference values, a correction of the internal time unit of the respective sensor unit is carried out (103).

4. Method according to one of the preceding claims,
**characterised in that** a sensor identifier of the respective sensor unit is furthermore assigned (105) to the captured sensor data.

5. Method according to one of the preceding claims,
**characterised in that** a start time, which depends on the receipt of the characteristic time feature of the characteristic signal by the respective sensor unit, for capturing the sensor data is specified (104) to the sensor units of the distributed system.

6. Method according to one of the preceding claims,
**characterised in that** the sensor unit of the distributed system is equipped with real-time access, that receiving times of the characteristic signal are determined by this sensor unit by way of monitoring the receipt of the characteristic signal emitted in the radio network at regular temporal intervals and by means of the real-time access, and that the determined receiving times of the characteristic signal are regularly transmitted to the central unit.

7. Method according to one of the preceding claims,
**characterised in that** a counter unit is implemented as an internal time unit in the sensor unit.

8. Method according to one of the preceding claims,
**characterised in that** a star-shaped, synchronised radio network, in particular a radio network according to the 4G or 5G standard is used as the radio network.

9. Method according to one of the preceding claims,
**characterised in that** beacon signals are used (101) as characteristic signals which are emitted from the base stations of the radio network for user identification.

10. Method according to one of the preceding claims,
**characterised in that,** in the radio network, the so-called narrowband IoT protocol is used for communication with the sensor units.

11. Method according to one of claims 1 to 9, **characterised in that,** in the radio network, the so called LTE Cat M1 protocol is used for communication with the sensor units.

## Revendications

1. Procédé de synchronisation temporelle d'unités de capteurs dans un système réparti, dans lequel les unités de capteurs présentent chacune une unité de temps interne, et dans lequel des données de capteurs sont saisies par les unités de capteurs et transmises à une unité centrale via un réseau radio, **caractérisé en ce qu'**un signal d'identification est émis (101) à intervalles réguliers dans le réseau radio, **en ce qu'**une réception du signal d'identification est surveillée (102) dans une unité de capteur respective, **en ce que**, lors de la réception d'une caractéristique temporelle du signal d'identification, une valeur actuelle respective de l'unité de temps interne de l'unité de capteur respective est enregistrée (103) avec au moins une identification d'émetteur contenue dans le signal d'identification, **en ce que**, lors de la saisie de données de capteurs, une autre valeur actuelle de l'unité de temps interne de l'unité de capteur respective est enregistrée (104), **en ce que** au moins la valeur de l'unité de temps interne enregistrée lors de la réception de la caractéristique temporelle du signal d'identification, l'identification d'émetteur correspondante du signal caractéristique, et l'autre valeur de l'unité de temps interne enregistrée lors de la saisie des données de capteurs sont attribuées aux données de capteurs saisies et transmises (105) à l'unité centrale en même temps que les données de capteurs, et **en ce qu'**une base de temps de référence est déduite au moyen de l'identification de l'émetteur et une relation temporelle des données de capteurs transmises de l'unité de capteur respective avec la base de temps de référence est déduite (106) au moyen de la valeur de l'unité de temps interne de l'unité de capteur respective enregistrée lors de la réception de la caractéristique temporelle du signal caractéristique et de l'autre valeur de l'unité de temps interne de l'unité de capteur respective enregistrée lors de la saisie des données de capteurs.

2. Procédé selon la revendication 1, **caractérisé en ce qu**'une signature de courant d'une unité radio de l'unité de capteur est utilisée (102) pour surveiller la réception du signal d'identification dans l'unité de capteur respective.

3. Procédé selon l'une des revendications précédentes, **caractérisé en ce que** des valeurs différentielles sont formées entre une valeur de l'unité de temps interne lors de la réception de la caractéristique temporelle du signal caractéristique actuellement reçu et des valeurs de l'unité de temps interne qui ont été enregistrées lors de la réception de la caractéristique temporelle de signaux caractéristiques précédemment reçus, **en ce que** les valeurs différentielles sont comparées et, dans le cas d'une divergence entre les valeurs différentielles, une correction de l'unité de temps interne de l'unité de capteur respective est effectuée (103).

4. Procédé selon l'une des revendications précédentes, **caractérisé en ce qu**'une identification de capteur de l'unité de capteur respective est en outre attribuée (105) aux données de capteurs saisies.

5. Procédé selon l'une des revendications précédentes, **caractérisé en ce qu**'un moment de début pour la saisie des données de capteurs est prédéfini (104) pour les unités de capteurs du système réparti; le moment de début dépend de la réception de la caractéristique temporelle du signal d'identification par l'unité de capteur respective.

6. Procédé selon l'une des revendications précédentes, **caractérisé en ce qu**'une unité de capteur du système réparti est dotée d'un accès en temps réel, en ce que des moments de réception du signal d'identification émis à intervalles réguliers dans le réseau radio et au moyen de l'accès en temps réel sont déterminés par cette unité de capteur, et en ce que les moments de réception déterminés du signal d'identification sont transmis régulièrement à l'unité centrale.

7. Procédé selon l'une des revendications précédentes, **caractérisé en ce qu**'une unité de comptage est utilisée comme unité de temps interne dans l'unité de capteur.

8. Procédé selon l'une des revendications précédentes, **caractérisé en ce qu**'un réseau radio synchronisé en forme d'étoile, en particulier un réseau radio selon la norme 4G ou 5G, est utilisé comme réseau radio.

9. Procédé selon l'une des revendications précédentes, **caractérisé en ce que** des signaux de balise sont utilisés (101) comme signaux d'identification, lesquels sont émis par des stations de base du réseau radio pour une identification de l'abonné.

10. Procédé selon l'une des revendications précédentes, **caractérisé en ce que** le protocole Narrowband Iot est utilisé dans le réseau radio pour communiquer avec les unités de capteurs.

11. Procédé selon l'une des revendications 1 à 9, **caractérisé en ce que** le protocole LTE-Cat Ml est utilisé dans le réseau radio pour communiquer avec les unités de capteurs.
